# FASCICULE DE BREVET EUROPEEN

(11) **EP 3 945 618 B1**
(45) Date de publication et mention de la délivrance du brevet: **30.08.2023**
(21) Numéro de dépôt: 21188678.3
(22) Date de dépôt: 30.07.2021
(51) Int. Cl.: H01M 10/04, H01M 50/209, H01M 50/211

(54) **DISPOSITIF ET PROCÉDÉ DE CONTENTION POUR MODULE D'ACCUMULATEUR ÉLECTROCHIMIQUE PRISMATIQUE**
EINHALTSVORRICHTUNG UND VERFAHREN FÜR EIN PRISMATISCHES ELEKTROCHEMISCHES AKKUMULATORMODUL
CONTENTION DEVICE AND METHOD FOR A PRISMATIC ELECTROCHEMICAL ACCUMULATOR MODULE

(30) Priorité: 31.07.2020 FR 2008215
(43) Date de publication de la demande: 02.02.2022
(73) Titulaire: Commissariat à l'énergie atomique et aux énergies alternatives, 75015 Paris (FR)
(72) Inventeur: DE PAOLI, Lionel, 38054 GRENOBLE Cedex 09 (FR); MARTIN, Pascal, 38054 GRENOBLE Cedex 09 (FR)
(74) Mandataire: INNOV-GROUP

(56) Documents cités:
- EP-A1- 2 280 442
- EP-A1- 2 360 768
- WO-A2-2012/009145
- DE-A1-102004 027 694
- DE-A1-102010 031 641
- JP-A- 2013 020 740
- US-A- 6 040 072
- US-B2- 8 054 041

## Description

### DOMAINE TECHNIQUE

L'invention concerne le domaine du stockage d'énergie électrique et vise les techniques de contention nécessaires pour la mise en oeuvre des accumulateurs électrochimiques prismatiques ou en sachets souples, qu'ils soient embarqués dans des véhicules ou stationnaires.

### ART ANTÉRIEUR

Certains accumulateurs électrochimiques prismatiques, agencés dans des contenants souples ou rigides, nécessitent l'application d'une force de compression sur leurs faces latérales afin d'empêcher la délamination des couches internes, ce qui dégraderait la durée de vie et les performances de ces accumulateurs.

Le document US8054041 décrit un dispositif de contention pour accumulateur électrochimique, comportant une sangle et un dispositif de mise en tension de type ridoir permettant de rapprocher par serrage les deux extrémités de la sangle et exercer ainsi une contention sur l'accumulateur.

On connait par ailleurs des moyens mécaniques de mise en contention consistant en des tirants transversaux au module d'accumulateur et adaptés à serrer mutuellement deux plaques de contention appliquées sur les faces latérales du module. Ces tirants peuvent être soudés ou vissés sur les plaques latérales. Ces solutions permettent d'exercer une force de serrage plus importante que les solutions impliquant une sangle et sont donc plus adaptées aux accumulateurs électrochimiques récents. Cependant, ces solutions sont couteuses, difficiles à mettre en place et sont peu flexibles, le démontage de l'accumulateur électrochimique devenant difficile, voire impossible.

### EXPOSÉ DE L'INVENTION

L'invention a pour but d'améliorer les moyens de contention pour accumulateurs électrochimiques prismatiques de l'art antérieur.

À cet effet, l'invention vise un dispositif de contention pour module d'accumulateur électrochimique prismatique ou en sachets souples, ce dispositif comportant une sangle de cerclage et un mécanisme de serrage. Ce mécanisme de serrage comporte :
- un socle présentant une lumière centrale ;
- un premier tendeur mobile et un deuxième tendeur mobile disposés côte à côte dans la lumière centrale ;
- un poussoir mobile disposé dans la lumière centrale, en vis-à-vis du premier tendeur mobile, les deux tendeurs mobiles et le poussoir mobile étant montés coulissants sur le socle par une liaison glissière selon une direction longitudinale de serrage, les deux tendeurs mobiles et le poussoir mobile s'étendant chacun dans la lumière centrale sensiblement perpendiculairement à la direction longitudinale de serrage ;
- une tige de serrage adaptée à déplacer et contraindre le poussoir mobile en direction du premier tendeur mobile, selon la direction longitudinale de serrage ;
la sangle de cerclage formant une boucle autour du premier tendeur mobile par l'une de ses extrémités dont un tronçon est disposé entre le poussoir mobile et le premier tendeur mobile, et formant une boucle autour du deuxième tendeur mobile par l'autre de ses extrémités.

Selon un autre objet, l'invention vise un module d'accumulateur électrochimique prismatique comportant au moins une cellule d'accumulateur, une plaque de serrage sur deux faces opposées, et un dispositif de contention tel que décrit ci-dessus.

Selon un autre objet, l'invention vise un procédé de contention pour module d'accumulateur électrochimique prismatique ou en sachets souples, qui met en oeuvre un dispositif de contention tel que décrit ci-dessus, et qui comporte les étapes suivantes :
- mettre en place la sangle de cerclage autour du module ;
- pré-serrer manuellement la sangle de cerclage en tirant sur ses extrémités libres ;
- serrer la tige de serrage jusqu'à obtenir une force de serrage prédéterminée de la sangle de cerclage.

Le dispositif et le procédé selon l'invention permettent l'utilisation d'une sangle de cerclage même dans le cas des accumulateurs électrochimiques récents qui requièrent l'exercice d'une importante force de serrage sur leurs faces latérales. Le mécanisme de serrage permet la fermeture de la sangle et sa mise en tension contrôlée, même pour une forte tension, avec un encombrement et une masse réduits compte tenu de la force de contention exercée.

La notion de contention s'entend ici comme la mise en compression des faces latérales d'un module d'accumulateur électrochimique.

Un tel dispositif de contention bénéficie d'une mise en place aisée et sans risque électrique, ce qui lui permet d'être appliqué à des accumulateurs électrochimiques de forte tension même à proximité des bornes de connexion. Les accumulateurs électrochimiques utilisés dans les véhicules électriques, par exemple, présentent à la fois des bornes de connexion délivrant un niveau de tension qui représente un danger, et une configuration confinée avec peu d'espace pour la disposition des moyens de contention.

Des accumulateurs électrochimiques de forte tension et de forte densité d'énergie peuvent ainsi être mis en oeuvre avec une force de contention élevée, et ce de manière flexible et modulaire en permettant de plus un démontage aisé qui augmente la réparabilité de l'ensemble.

Cette solution permet la mise en tension de la sangle de manière progressive et précise sur une large plage de force de serrage, qui peut varier d'un centième de Newton à plusieurs dizaines de kN.

Le dispositif de contention selon l'invention peut comporter les caractéristiques additionnelles suivantes, seules ou en combinaison :
- les deux tendeurs mobiles et le poussoir mobile comportent chacun des coulisseaux à leurs extrémités, ces coulisseaux étant engagés dans des rainures latérales du socle, s'étendant selon une direction parallèle à la direction longitudinale de serrage, de part et d'autre de la lumière centrale ;
- le poussoir mobile comporte une surface de pression et le premier tendeur mobile comporte une surface de contact, ces deux surfaces étant adaptées à serrer le tronçon de la sangle de cerclage qui est disposé entre le poussoir mobile et le premier tendeur mobile, lors du serrage de la tige de serrage ;
- la tige de serrage présente une extrémité en liaison pivot avec le poussoir mobile ;
- la tige de serrage est une vis en liaison hélicoïdale avec une portion taraudée du socle ;
- la tige de serrage s'étend suivant la direction longitudinale de serrage ;
- la sangle de cerclage est captive sur au moins l'un des tendeurs mobiles par une fixation des plis de la sangle de cerclage, la sangle de cerclage pouvant être captive sur l'un des tenseurs mobiles, ou sur les deux ;
- un tronçon de la sangle de cerclage est disposé entre le deuxième tendeur mobile et le socle ;
- le socle comporte une surface de pression et le deuxième tendeur mobile comporte une surface de contact, ces deux surfaces étant adaptées à serrer le tronçon de la sangle de cerclage qui est disposé entre le deuxième tendeur mobile et le socle, lors du serrage de la tige de serrage ;
- le mécanisme de serrage comporte : un deuxième poussoir mobile disposé dans la lumière centrale, en vis-à-vis du deuxième tendeur mobile, le deuxième poussoir mobile étant monté coulissant sur le socle par une liaison glissière selon la direction longitudinale de serrage, le deuxième poussoir mobile s'étendant dans la lumière centrale sensiblement perpendiculairement à la direction longitudinale de serrage ; et une deuxième tige de serrage adaptée à déplacer et contraindre le deuxième poussoir mobile en direction du deuxième tendeur mobile, selon la direction longitudinale de serrage ;
- un tronçon de la sangle de cerclage est disposé entre le deuxième tendeur mobile et le deuxième poussoir mobile ;
- le deuxième poussoir mobile comporte une surface de pression et le deuxième tendeur mobile comporte une surface de contact, ces deux surfaces étant adaptées à serrer le tronçon de sangle de cerclage disposé entre le deuxième poussoir mobile et le deuxième tendeur mobile, lors du serrage d'une tige de serrage ;
- le deuxième poussoir mobile comporte des coulisseaux à ses extrémités, ces coulisseaux étant engagés dans des rainures latérales du socle qui s'étendent selon la direction longitudinale de serrage, de part et d'autre de la lumière centrale ;
- la deuxième tige de serrage présente une extrémité en liaison pivot avec le deuxième poussoir mobile ;
- la deuxième tige de serrage est une vis en liaison hélicoïdale avec une portion taraudée du socle ;
- les deux tiges de serrage sont coaxiales ;
- le socle comporte une semelle pour son appui sur le module d'accumulateur électrochimique, cette semelle comportant un logement pour les plis de la sangle de cerclage ;
- le socle comporte un pied de support du côté opposé au logement.

### PRÉSENTATION DES FIGURES

D'autres caractéristiques et avantages de l'invention ressortiront de la description non limitative qui suit, en référence aux dessins annexés dans lesquels :
- La figure 1 illustre un module d'accumulateur selon l'invention ;
- La figure 2 illustre une variante d'un module d'accumulateur selon l'invention ;
- La figure 3 représente une autre variante d'un module d'accumulateur selon l'invention, vu en coupe ;
- La figure 4 est une vue en perspective du dispositif de contention des modules des figures 1 à 3, selon un premier mode de réalisation de l'invention ;
- La figure 5 est une vue de dessus du dispositif de la figure 4 ;
- La figure 6 est une vue de côté en coupe du dispositif de la figure 4 ;
- La figure 7 est une vue de dessus en coupe du mécanisme de serrage du dispositif de la figure 4 ;
- La figure 8 est une vue de face du dispositif de la figure 4 ;
- La figure 9 est une vue en perspective d'un dispositif de contention selon un deuxième mode de réalisation de l'invention ;
- La figure 10 est une vue de côté en coupe du dispositif de la figure 9 ;
- La figure 11 est une vue agrandie de la figure 10.

### DESCRIPTION DÉTAILLÉE

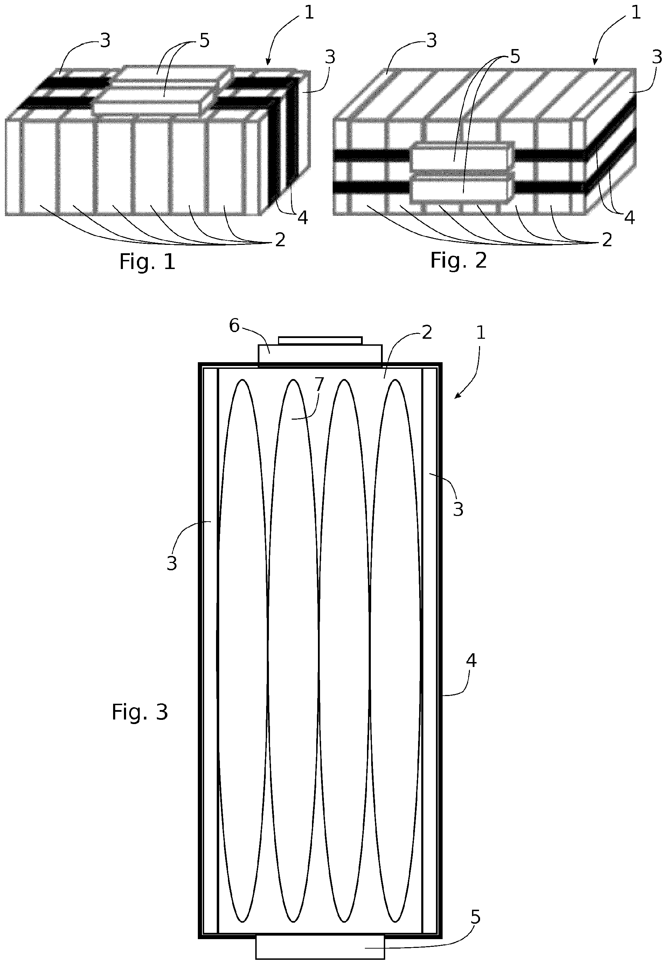

Les figures 1 à 3 sont des figures schématiques illustrant deux exemples de module d'accumulateur électrochimique 1.

Dans l'exemple des figures 1 et 2, chaque module 1 est constitué de six cellules d'accumulateur 2. Le module 1 comporte un dispositif de contention comprenant deux plaques de serrage 3 disposées sur les parois latérales du module 1. Le dispositif de contention comprend, dans cet exemple, deux sangles 4 munies chacune d'un mécanisme de serrage 5. Les figures 1 et 2 diffèrent en montrant deux exemples de disposition des sangles 4 : cerclant le module 1 selon des plans verticaux (figure 1), ou cerclant le module 1 selon des plans horizontaux (figure 2). Alternativement, les mécanismes de serrage peuvent être doublés de part et d'autre des modules pour faciliter l'égalisation du serrage. Ils peuvent être aussi positionnés sur les plaques de serrage 3.

Sur l'exemple de la figure 3, le module 1 n'est constitué que d'une seule cellule d'accumulateur 2. Le dispositif de contention peut en effet être appliqué à tout module 1 comportant une ou plusieurs cellules d'accumulateur 2. La figure 3 est une vue en coupe du module 1 montrant une borne de connexion 6 de la cellule d'accumulateur 2.

Les cellules d'accumulateur 2 des figures 1 à 3 sont des cellules d'accumulateur prismatiques, c'est-à-dire que les bobineaux 7 (voir figure 3) sont aplatis et sont disposés dans un boitier prismatique. Cette disposition permet la mise en oeuvre de cellules d'accumulateur 2 de grande dimension et de forte puissance, qui comportent des bornes de connexion 6 également de grande dimension, et qui présentent une forte densité d'énergie. Cet agencement est incontournable dans de nombreuses applications exigeantes, notamment dans les véhicules électriques. Cependant, cet agencement nécessite une force de contention importante sur les parois latérales des modules 1, force de contention qui augmente durant le cycle de vie du module 1. À titre d'exemple, un module d'accumulateur de véhicule électrique actuel nécessite une force de contention de l'ordre de 2 kN par cellule d'accumulateur et qui peut aller jusqu'à 15 kN en fin de vie de l'accumulateur. Cette force de contention correspond à la force de serrage de la sangle de cerclage 4.

Dans l'exemple de la figure 3, le module 1 est constitué d'une seule cellule d'accumulateur 2, entourée par une seule sangle 4 et son mécanisme de serrage 5. Le mécanisme de serrage 5 est de plus disposé sous le module 1 en libérant les faces latérales du module 1, par exemple pour accoler plusieurs modules côte à côte, et en libérant l'espace supérieur du module 1 qui comporte les bornes de connexion 6, pour éviter tout risque électrique. Dans cette position, le mécanisme de serrage 5 constitue optionnellement un pied de support pour le module 1, ce pied de support permettant néanmoins un accès au réglage du serrage de la sangle 4.

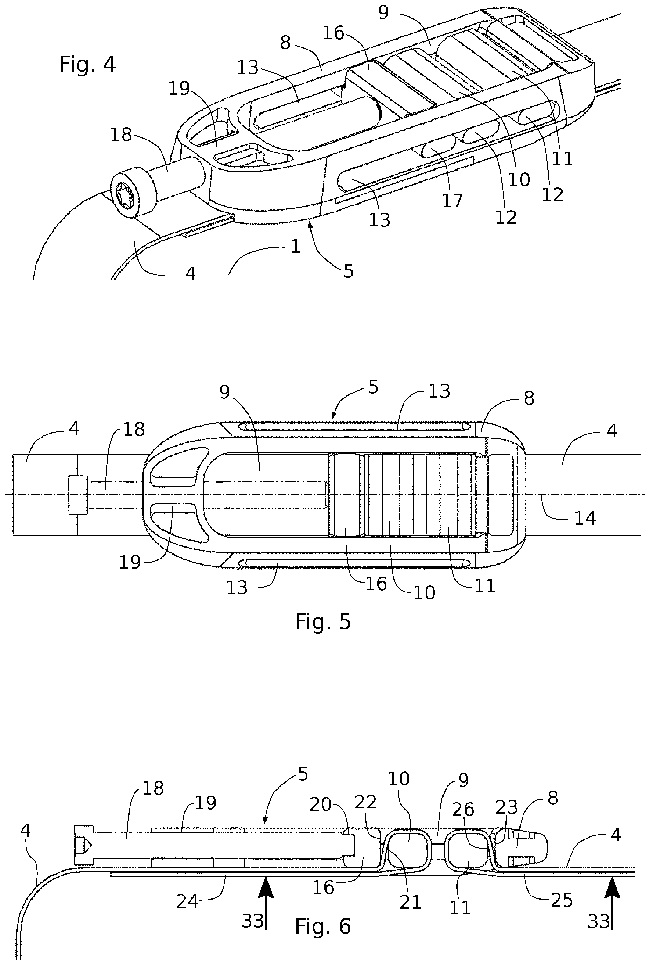

Les figures 4 à 8 illustrent plus en détail la constitution du mécanisme de serrage 5 selon un premier mode de réalisation.

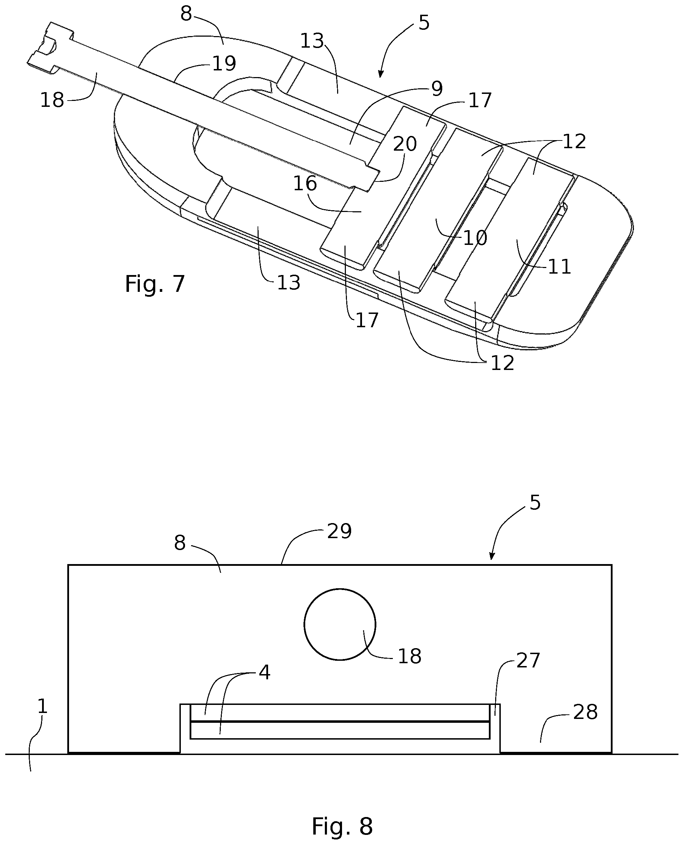

La vue en perspective de la figure 4 et la vue de dessus de la figure 5 permettent une représentation générale des éléments du mécanisme de serrage 5. La coupe par un plan vertical de la figure 6, et la coupe par un plan horizontal de la figure 7 illustrent la coopération des différents éléments.

Le mécanisme de serrage 5 comporte un socle 8 adapté à venir contre le module 1 et comportant une lumière centrale 9.

Un premier tendeur 10 et un deuxième tendeur 11 sont disposés transversalement dans la lumière 9, côte à côte, c'est-à-dire qu'aucun autre élément mobile n'est présent entre les deux tendeurs 10, 11. Les tendeurs 10, 11 s'étendent perpendiculairement à la direction de serrage 14. Les deux tendeurs 10, 11 comportent à chacune de leurs extrémités des coulisseaux 12 qui sont engagés dans des rainures latérales 13 du socle 8. Cet agencement assure une liaison glissière entre les tendeurs 10, 11 et le socle 8 selon une direction longitudinale de serrage 14 illustrée à la figure 5. En variante, tout autre dispositif de glissière peut être employé entre les tendeurs 10, 11 et le socle 8.

Le mécanisme de serrage 5 comporte de plus un poussoir 16 qui s'étend également, de la même manière que les tendeurs 10, 11, de manière transversale dans la lumière 9, perpendiculairement à la direction de serrage 14.

Le poussoir 16 comporte également des coulisseaux 17 qui sont engagés dans les rainures 13 et qui permettent une liaison glissière du poussoir 16 avec le socle 8.

Une tige de serrage 18 est de plus prévue pour commander le déplacement du poussoir 16 le long de la direction de serrage 14 et en direction du premier tendeur 10. La tige de serrage 18 permet de plus la mise en contrainte du poussoir 16 contre le premier tendeur 10. La tige de serrage 18 est ici constituée d'une vis de serrage dont la portion filetée est en liaison hélicoïdale avec une portion taraudée 19 du socle 8.

La vis de serrage 18 comporte de préférence une extrémité 20 insérée dans un alésage pratiqué dans le poussoir 16, pour assurer une liaison pivot entre la vis de serrage 18 et le poussoir 16 permettant une rotation de la vis de serrage 16 conjointement à la translation du poussoir 16. Optionnellement, la vis de serrage 18 peut être captive du poussoir 16, c'est-à-dire qu'elle est en liaison pivot non glissant avec le poussoir 16, ce qui permet de commander la translation du poussoir 16 avec la vis 18 dans les deux sens de la direction longitudinale de serrage 14.

En référence à la figure 6, la section des tendeurs 10, 11 est de préférence une forme carrée à coins arrondis, ou toute autre forme adaptée, et comportant cependant de préférence une surface de contact externe 21 qui s'étend ici selon un plan perpendiculaire à la direction de serrage 14. Le poussoir 16 présente également une section sensiblement carrée et présente une surface de pression 22 s'étendant également selon un plan perpendiculaire à la direction de serrage 14.

Le socle 8 comporte également, à l'extrémité longitudinale de la lumière 9 qui est en vis-à-vis du deuxième tendeur 11, une surface de pression 23 s'étendant également dans un plan perpendiculaire à la direction de serrage 14.

La figure 6 illustre également l'agencement de la sangle 4 au niveau du mécanisme de serrage 5. La sangle 4 présente :
- une première extrémité 24 qui est disposée autour du premier tendeur 10 ;
- une deuxième extrémité 25 qui est disposée autour du deuxième tendeur 11.

Sur la figure 6, selon une première possibilité d'agencement des extrémités 24, 25, le brin libre de chacune de ces extrémités 24, 25 est passé entre la sangle 4 elle-même et le module 1. En variante, les brins libres des extrémités 24, 25 ou un des brins libres des extrémités 24 ou 25, peut être passé entre la sangle 4 elle-même et le socle 8.

Quelle que soit la manière pour les extrémités 24, 25 de sangle d'entourer les tendeurs 10, 11, un tronçon de la sangle 4 passe entre la surface de pression 22 du poussoir 16 et la surface de contact 21, tandis qu'un autre tronçon passe entre la surface de contact 26 du deuxième tendeur 11 et la surface de pression 23 du socle.

Sur la figure 6, le mécanisme de serrage 5 est représenté dans une position obtenue après mise en place de la sangle 4 et avant serrage de la vis 18. Le procédé de mise en place du dispositif de contention peut comporter les étapes suivantes :
- mise en place de la sangle 4 autour du module 1 ;
- mise en place des extrémités 24, 25 de sangle en coopération avec les tendeurs 10, 11 comme décrits ci-dessus ;
- pré-serrage par traction (manuelle ou automatisée) des extrémités 24, 25 de sangle pour aboutir à la position de la figure 6, le dispositif de contention étant ajusté sur le module 1 et prêt au serrage ;
- serrage de la vis de serrage 18 qui repousse le poussoir 16 en direction du premier tendeur 10 jusqu'à ce que le poussoir 16 repousse le premier tendeur 10, en pinçant un tronçon de sangle 4 entre deux butées formées par les surfaces de contact 21 et de pression 22. La résistance de la sangle 4 à la traction entraine également le pincement d'un tronçon de sangle entre deux butées constituées par la surface de contact 26 du deuxième tendeur 11 et la surface de pression 23 du socle 8. Le serrage de la vis 18 augmente de manière concomitante la contrainte de pincement au niveau des tronçons de sangle, ainsi que la force de contention exercée sur le module 1.

La figure 8 illustre une variante dans laquelle le socle 8 comporte une semelle 28 destinée au contact avec le module 1. Le socle 8 comporte, au niveau de la semelle 28, un logement 27 dont la hauteur permet le libre passage des deux plis de sangle 4 qui y sont présents. Autrement dit, la hauteur du logement 27 est supérieure à deux épaisseurs de sangle 4 ce qui permet le passage des différents plis de la sangle 4, sans perturber l'appui de la semelle 28 sur le module 1.

Dans cette variante, comme la semelle 28 prend appui sur le module 1, le socle 8 peut de plus comporter une face d'appui 29 adaptée à constituer un pied de support pour le module 1 au cas où le module 1 est prévu pour s'appuyer sur le mécanisme de serrage 5, comme sur l'exemple de la figure 3.

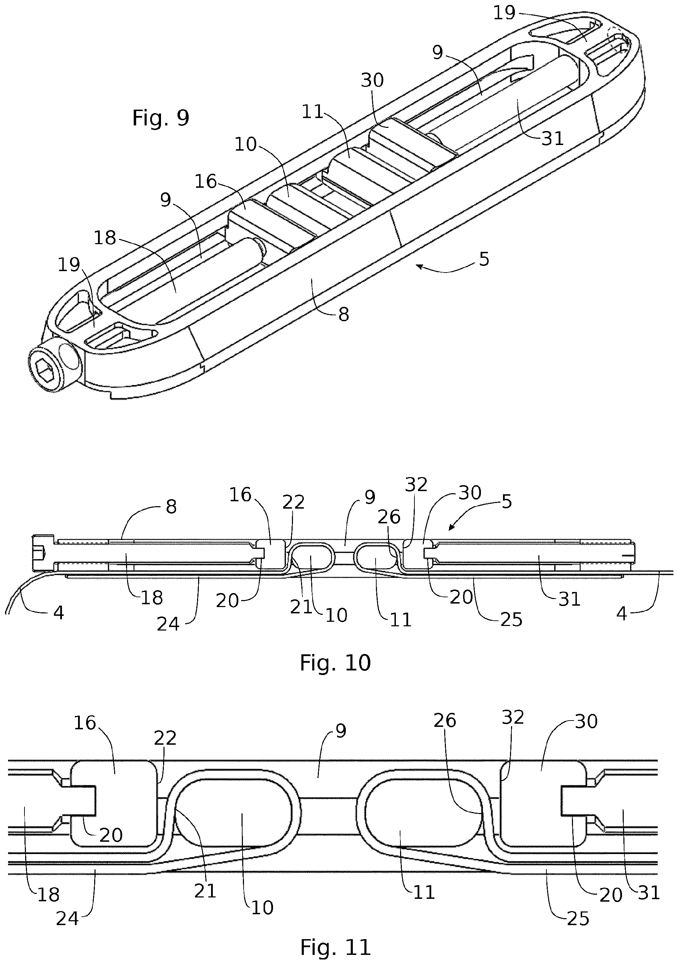

Les figures 9 à 11 illustrent un deuxième mode de réalisation du mécanisme de serrage 5 dans lequel un deuxième poussoir 30 est disposé en vis-à-vis du deuxième tendeur 11 et une deuxième vis de serrage 31 est adaptée à déplacer le deuxième poussoir 30 en translation en direction du deuxième tendeur 11. La deuxième vis de serrage 31 est agencée de manière similaire à la première vis de serrage 18, avec une liaison hélicoïdale sur une portion taraudée 19 du socle 8.

La figure 10, et sa vue agrandie de la figure 11, sont des coupes similaires à la vue de la figure 7 et illustrent l'agencement de la sangle 4 autour des deux tendeurs 10 et 11. Selon ce deuxième mode de réalisation, lors du serrage : un tronçon de la sangle 4 est pincé entre la surface de pression 22 du poussoir 16 et la surface de contact 21 du premier tendeur 10, comme dans le deuxième mode de réalisation ; et un autre tronçon de la sangle 4 est pincé entre une surface de pression 32 du deuxième poussoir 30 et la surface de contact 26 du deuxième tendeur 11.

Le procédé et les étapes de serrage ont lieu de la même manière que pour le premier mode de réalisation, les vis de serrage 18, 31, ou les deux, pouvant être actionnées.

Ce deuxième mode de réalisation permet une plus grande plage de serrage pour la sangle 4, une possibilité de serrer la sangle 4 en accédant à l'un ou l'autre des côtés du socle 8, et un serrage plus rapide de la sangle 4 en cas d'actionnement simultané des deux vis de serrage 18.

Des variantes de réalisation du dispositif et du procédé peuvent être mises en oeuvre sans sortir du cadre de l'invention. Par exemple, la tige de serrage 18 peut être réalisée par tout autre dispositif adapté tel qu'une tige avec une crémaillère.

La sangle 4 est de préférence métallique, de même que le socle 8, en vue d'exercer une importante force de contention. En variante, la sangle 4 peut être en polymère ou en textile technique tressé tel qu'en polyester ou aramide.

De plus, le mécanisme de serrage 5 peut être livré avec une sangle 4 captive déjà mise en place sur les tendeurs 10, 11 et dont les deux plis des extrémités 24, 25 sont fixés, par exemple par soudage ou collage, au niveau des jonctions 33 (voir figure 7).

## Revendications

1. Dispositif de contention pour module d'accumulateur électrochimique prismatique ou en sachets souples (1), ce dispositif comportant une sangle de cerclage (4) et un mécanisme de serrage (5), **caractérisé en ce que** le mécanisme de serrage (5) comporte :
- un socle (8) présentant une lumière centrale (9) ;
- un premier tendeur mobile (10) et un deuxième tendeur mobile (11) disposés côte à côte dans la lumière centrale (9) ;
- un poussoir mobile (16) disposé dans la lumière centrale (9), en vis-à-vis du premier tendeur mobile (10), les deux tendeurs mobiles (10,11) et le poussoir mobile (16) étant montés coulissants sur le socle (8) par une liaison glissière selon une direction longitudinale de serrage (14), les deux tendeurs mobiles (10,11) et le poussoir mobile (16) s'étendant chacun dans la lumière centrale (9) sensiblement perpendiculairement à la direction longitudinale de serrage (14) ;
- une tige de serrage (18) adaptée à déplacer et contraindre le poussoir mobile (16) en direction du premier tendeur mobile (10), selon la direction longitudinale de serrage (14) ;
la sangle de cerclage (4) formant une boucle autour du premier tendeur mobile (10) par l'une de ses extrémités (24) dont un tronçon est disposé entre le poussoir mobile (16) et le premier tendeur mobile (10), et formant une boucle autour du deuxième tendeur mobile (11) par l'autre de ses extrémités (25).

2. Dispositif selon la revendication 1, **caractérisé en ce que** les deux tendeurs mobiles (10,11) et le poussoir mobile (16) comportent chacun des coulisseaux (12,17) à leurs extrémités, ces coulisseaux (12,17) étant engagés dans des rainures latérales (13) du socle (8), s'étendant selon une direction parallèle à la direction longitudinale de serrage (14), de part et d'autre de la lumière centrale (9).

3. Dispositif selon l'une des revendications précédentes, **caractérisé en ce que** le poussoir mobile (16) comporte une surface de pression (22) et le premier tendeur mobile (10) comporte une surface de contact (21), ces deux surfaces (22,21) étant adaptées à serrer le tronçon de la sangle de cerclage (4) qui est disposé entre le poussoir mobile (16) et le premier tendeur mobile (10), lors du serrage de la tige de serrage (18).

4. Dispositif selon l'une des revendications précédentes, **caractérisé en ce que** la tige de serrage (18) présente une extrémité (20) en liaison pivot avec le poussoir mobile (16).

5. Dispositif selon l'une des revendications précédentes, **caractérisé en ce que** la tige de serrage (18) est une vis en liaison hélicoïdale avec une portion taraudée (19) du socle (8).

6. Dispositif selon l'une des revendications précédentes, **caractérisé en ce que** la tige de serrage (18) s'étend suivant la direction longitudinale de serrage (14).

7. Dispositif selon l'une des revendications précédentes, **caractérisé en ce que** la sangle de cerclage (4) est captive sur au moins l'un des tendeurs mobiles (10,11) par une fixation (33) des plis de la sangle de cerclage (4).

8. Dispositif selon l'une des revendications précédentes, **caractérisé en ce qu'**un tronçon de la sangle de cerclage (4) est disposé entre le deuxième tendeur mobile (11) et le socle (8).

9. Dispositif selon l'une des revendications précédentes, **caractérisé en ce que** le socle (8) comporte une surface de pression (23) et le deuxième tendeur mobile (11) comporte une surface de contact (26), ces deux surfaces (23,26) étant adaptées à serrer le tronçon de la sangle de cerclage (4) qui est disposé entre le deuxième tendeur mobile (11) et le socle (8), lors du serrage de la tige de serrage (18).

10. Dispositif selon l'une des revendications 1 à 8, **caractérisé en ce que** le mécanisme de serrage (5) comporte :
- un deuxième poussoir mobile (30) disposé dans la lumière centrale (9), en vis-à-vis du deuxième tendeur mobile (11), le deuxième poussoir mobile (30) étant monté coulissant sur le socle (8) par une liaison glissière selon la direction longitudinale de serrage (14), le deuxième poussoir mobile (30) s'étendant dans la lumière centrale (9) sensiblement perpendiculairement à la direction longitudinale de serrage (14) ;
- une deuxième tige de serrage (31) adaptée à déplacer et contraindre le deuxième poussoir mobile (30) en direction du deuxième tendeur mobile (11), selon la direction longitudinale de serrage (14).

11. Dispositif selon la revendication 10, **caractérisé en ce qu'**un tronçon de la sangle de cerclage (4) est disposé entre le deuxième tendeur mobile (11) et le deuxième poussoir mobile (30).

12. Dispositif selon l'une des revendications 10 ou 11, **caractérisé en ce que** le deuxième poussoir mobile (30) comporte une surface de pression (32) et le deuxième tendeur mobile (11) comporte une surface de contact (26), ces deux surfaces (32,26) étant adaptées à serrer le tronçon de sangle de cerclage (4) disposé entre le deuxième poussoir mobile (30) et le deuxième tendeur mobile (11), lors du serrage d'une tige de serrage (18,31).

13. Dispositif selon l'une des revendications 10 à 12, **caractérisé en ce que** le deuxième poussoir mobile (30) comporte des coulisseaux (17) à ses extrémités, ces coulisseaux (17) étant engagés dans des rainures latérales (13) du socle (8) qui s'étendent selon la direction longitudinale de serrage (14), de part et d'autre de la lumière centrale (9).

14. Dispositif selon l'une des revendications 10 à 13, **caractérisé en ce que** la deuxième tige de serrage (31) présente une extrémité (20) en liaison pivot avec le deuxième poussoir mobile (16).

15. Dispositif selon l'une des revendications 10 à 14, **caractérisé en ce que** la deuxième tige de serrage (31) est une vis en liaison hélicoïdale avec une portion taraudée (19) du socle (8).

16. Dispositif selon l'une des revendications 10 à 15, caractérisé en les deux tiges de serrage (18,31) sont coaxiales.

17. Dispositif selon l'une des revendications précédentes, **caractérisé en ce que** le socle (8) comporte une semelle (28) pour son appui sur le module d'accumulateur électrochimique (1), cette semelle (28) comportant un logement (27) pour les plis de la sangle de cerclage (4).

18. Dispositif selon la revendication 17, **caractérisé en ce que** le socle (8) comporte un pied de support (29) du côté opposé au logement (27).

19. Module d'accumulateur électrochimique prismatique comportant au moins une cellule d'accumulateur (2), et comportant une plaque de serrage (3) sur deux faces opposées, **caractérisé en ce qu'**il comporte un dispositif de contention selon l'une des revendications 1 à 18.

20. Procédé de contention pour module d'accumulateur électrochimique prismatique, **caractérisé en ce qu'**il met en oeuvre un dispositif de contention selon l'une des revendications 1 à 18 et **en ce qu'**il comporte les étapes suivantes :
- mettre en place la sangle de cerclage (4) autour du module (1) ;
- pré-serrer manuellement la sangle de cerclage (4) en tirant sur ses extrémités libres (24,25) ;
- serrer la tige de serrage (18) jusqu'à obtenir une force de serrage prédéterminée de la sangle de cerclage (4).

## Patentansprüche

1. Zusammenhaltevorrichtung für ein prismatisches oder in flexiblen Behältern befindliches elektrochemisches Akkumulatormodul (1), wobei diese Vorrichtung einen Umfangsgurt (4) und einen Spannmechanismus (5) umfasst, **dadurch gekennzeichnet, dass** der Spannmechanismus (5) Folgendes umfasst:
- eine Grundplatte (8), die eine mittige Öffnung (9) aufweist;
- ein erstes bewegliches Spannelement (10) und ein zweites bewegliches Spannelement (11), die in der mittigen Öffnung (9) nebeneinander angeordnet sind;
- ein bewegliches Druckelement (16), das in der mittigen Öffnung (9) gegenüber dem ersten beweglichen Spannelement (10) angeordnet ist, wobei die zwei beweglichen Spannelemente (10, 11) und das bewegliche Druckelement (16) gemäß einer Spannlängsrichtung (14) durch eine Gleitverbindung gleitend an der Grundplatte (8) montiert sind, wobei sich die zwei beweglichen Spannelemente (10, 11) und das bewegliche Druckelement (16) jeweils im Wesentlichen senkrecht zu der Spannlängsrichtung (14) in der mittigen Öffnung (9) erstrecken;
- einen Spannstift (18), der dazu angepasst ist, das bewegliche Druckelement (16) gemäß der Spannlängsrichtung (14) zu bewegen und in Richtung des ersten beweglichen Spannelements (10) zu zwingen;
wobei der Umfangsgurt (4) mit einem seiner Enden (24), von dem ein Teilstück zwischen dem beweglichen Druckelement (16) und dem ersten beweglichen Spannelement (10) angeordnet ist, eine Schleife um das erste bewegliche Spannelement (10) herum bildet und mit dem anderen seiner Enden (25) eine Schleife um das zweite bewegliche Spannelement (11) herum bildet.

2. Vorrichtung nach Anspruch 1, **dadurch gekennzeichnet, dass** die zwei beweglichen Spannelemente (10, 11) und das bewegliche Druckelement (16) an ihren Enden jeweils Gleitstücke (12, 17) umfassen, wobei diese Gleitstücke (12, 17) in seitliche Rillen (13) der Grundplatte (8) eingreifen, welche sich gemäß einer zu der Spannlängsrichtung (14) parallelen Richtung auf beiden Seiten der mittigen Öffnung (9) erstrecken.

3. Vorrichtung nach einem der vorhergehenden Ansprüche, **dadurch gekennzeichnet, dass** das bewegliche Druckelement (16) eine Druckfläche (22) umfasst und das erste bewegliche Spannelement (10) eine Kontaktfläche (21) umfasst, wobei diese zwei Flächen (22, 21) dazu angepasst sind, das Teilstück des Umfangsgurts (4), das zwischen dem beweglichen Druckelement (16) und dem ersten beweglichen Spannelement (10) angeordnet ist, zu spannen, wenn der Spannstift (18) gespannt wird.

4. Vorrichtung nach einem der vorhergehenden Ansprüche, **dadurch gekennzeichnet, dass** der Spannstift (18) ein Ende (20) aufweist, das mit dem beweglichen Druckelement (16) drehbar verbunden ist.

5. Vorrichtung nach einem der vorhergehenden Ansprüche, **dadurch gekennzeichnet, dass** der Spannstift (18) eine Schraube ist, die mit einem mit Innengewinde versehenen Abschnitt (19) der Grundplatte (8) schraubenförmig verbunden ist.

6. Vorrichtung nach einem der vorhergehenden Ansprüche, **dadurch gekennzeichnet, dass** sich der Spannstift (18) gemäß der Spannlängsrichtung (14) erstreckt.

7. Vorrichtung nach einem der vorhergehenden Ansprüche, **dadurch gekennzeichnet, dass** der Umfangsgurt (4) an mindestens einem der beweglichen Spannelemente (10, 11) durch eine Befestigung (33) der Umschläge des Umfangsgurts (4) fixiert ist.

8. Vorrichtung nach einem der vorhergehenden Ansprüche, **dadurch gekennzeichnet, dass** ein Teilstück des Umfangsgurts (4) zwischen dem zweiten beweglichen Spannelement (11) und der Grundplatte (8) angeordnet ist.

9. Vorrichtung nach einem der vorhergehenden Ansprüche, **dadurch gekennzeichnet, dass** die Grundplatte (8) eine Druckfläche (23) umfasst und das zweite bewegliche Spannelement (11) eine Kontaktfläche (26) umfasst, wobei diese zwei Flächen (23, 26) dazu angepasst sind, das Teilstück des Umfangsgurts (4), das zwischen dem zweiten beweglichen Spannelement (11) und der Grundplatte (8) angeordnet ist, zu spannen, wenn der Spannstift (18) gespannt wird.

10. Vorrichtung nach einem der Ansprüche 1 bis 8, **dadurch gekennzeichnet, dass** der Spannmechanismus (5) Folgendes umfasst:
- ein zweites bewegliches Druckelement (30), das in der mittigen Öffnung (9) gegenüber dem zweiten beweglichen Spannelement (11) angeordnet ist, wobei das zweite bewegliche Druckelement (30) gemäß der Spannlängsrichtung (14) durch eine Gleitverbindung gleitend an der Grundplatte (8) montiert ist, wobei sich das zweite bewegliche Druckelement (30) im Wesentlichen senkrecht zu der Spannlängsrichtung (14) in der mittigen Öffnung (9) erstreckt;
- einen zweiten Spannstift (31), der dazu angepasst ist, das zweite bewegliche Druckelement (30) gemäß der Spannlängsrichtung (14) zu bewegen und in Richtung des zweiten beweglichen Spannelements (11) zu zwingen.

11. Vorrichtung nach Anspruch 10, **dadurch gekennzeichnet, dass** ein Teilstück des Umfangsgurts (4) zwischen dem zweiten beweglichen Spannelement (11) und dem zweiten beweglichen Druckelement (30) angeordnet ist.

12. Vorrichtung nach einem der Ansprüche 10 oder 11, **dadurch gekennzeichnet, dass** das zweite bewegliche Druckelement (30) eine Druckfläche (32) umfasst und das zweite bewegliche Spannelement (11) eine Kontaktfläche (26) umfasst, wobei diese zwei Flächen (32, 26) dazu angepasst sind, das Teilstück des Umfangsgurts (4), das zwischen dem zweiten beweglichen Druckelement (30) und dem zweiten beweglichen Spannelement (11) angeordnet ist, zu spannen, wenn der Spannstift (18, 31) gespannt wird.

13. Vorrichtung nach einem der Ansprüche 10 bis 12, **dadurch gekennzeichnet, dass** das zweite bewegliche Druckelement (30) an seinen Enden Gleitstücke (17) umfasst, wobei diese Gleitstücke (17) in seitliche Rillen (13) der Grundplatte (8) eingreifen, welche sich gemäß der Spannlängsrichtung (14) auf beiden Seiten der mittigen Öffnung (9) erstrecken.

14. Vorrichtung nach einem der Ansprüche 10 bis 13, **dadurch gekennzeichnet, dass** der zweite Spannstift (31) ein Ende (20) aufweist, das mit dem zweiten beweglichen Druckelement (16) drehbar verbunden ist.

15. Vorrichtung nach einem der Ansprüche 10 bis 14, **dadurch gekennzeichnet, dass** der zweite Spannstift (31) eine Schraube ist, die mit einem mit Innengewinde versehenen Abschnitt (19) der Grundplatte (8) schraubenförmig verbunden ist.

16. Vorrichtung nach einem der Ansprüche 10 bis 15, **dadurch gekennzeichnet, dass** die zwei Spannstifte (18, 31) koaxial sind.

17. Vorrichtung nach einem der vorhergehenden Ansprüche, **dadurch gekennzeichnet, dass** die Grundplatte (8) eine Sohle (28) zur Auflage auf dem elektrochemischen Akkumulatormodul (1) umfasst, wobei diese Sohle (28) eine Aufnahme (27) für die Umschläge des Umfangsgurts (4) umfasst.

18. Vorrichtung nach Anspruch 17, **dadurch gekennzeichnet, dass** die Grundplatte (8) auf der zu der Aufnahme (27) entgegengesetzten Seite einen Stützfuß (29) umfasst.

19. Prismatisches elektrochemisches Akkumulatormodul, das mindestens eine Akkumulatorzelle (2) umfasst und das an zwei entgegengesetzten Seiten eine Spannplatte (3) umfasst, **dadurch gekennzeichnet, dass** es eine Zusammenhaltevorrichtung nach einem der Ansprüche 1 bis 18 umfasst.

20. Verfahren zum Zusammenhalten für ein prismatisches elektrochemisches Akkumulatormodul, **dadurch gekennzeichnet, dass** es eine Zusammenhaltevorrichtung nach einem der Ansprüche 1 bis 18 einsetzt und dass es die folgenden Schritte umfasst:
- Platzieren des Umfangsgurts (4) um das Modul (1) herum;
- manuelles Vorspannen des Umfangsgurts (4) durch das Ziehen an seinen freien Enden (24, 25);
- Spannen des Spannstifts (18), bis eine vorbestimmte Spannkraft des Umfangsgurts (4) erreicht ist.

## Claims

1. Containment device for a prismatic electrochemical accumulator module or flexible pouch module (1), this device comprising a binding strap (4) and a tightening mechanism (5), **characterized in that** the tightening mechanism (5) comprises:
- a base (8) having a central opening (9);
- a first movable tensioner (10) and a second movable tensioner (11) arranged side by side in the central opening (9);
- a movable pusher (16) arranged in the central opening (9), opposite the first movable tensioner (10), the two movable tensioners (10, 11) and the movable pusher (16) being slidably mounted on the base (8) by a slide connection in a longitudinal tightening direction (14), the two movable tensioners (10, 11) and the movable pusher (16) each extending in the central opening (9) substantially perpendicularly to the longitudinal tightening direction (14);
- a tightening rod (18) designed to move and constrain the movable pusher (16) in the direction of the first movable tensioner (10), in the longitudinal tightening direction (14);
the binding strap (4) forming a loop around the first movable tensioner (10) by one of its ends (24), a portion of which is arranged between the movable pusher (16) and the first movable tensioner (10), and forming a loop around the second movable tensioner (11) by the other of its ends (25).

2. Device according to Claim 1, **characterized in that** the two movable tensioners (10, 11) and the movable pusher (16) each comprise runners (12, 17) at their ends, these runners (12, 17) being engaged in lateral slots (13) of the base (8), extending in a direction parallel to the longitudinal tightening direction (14), on either side of the central opening (9).

3. Device according to either of the preceding claims, **characterized in that** the movable pusher (16) comprises a pressure surface (22) and the first movable tensioner (10) comprises a contact surface (21), these two surfaces (22, 21) being designed to clamp the portion of the binding strap (4) that is arranged between the movable pusher (16) and the first movable tensioner (10), during the tightening of the tightening rod (18).

4. Device according to one of the preceding claims, **characterized in that** the tightening rod (18) has an end (20) in pivot connection with the movable pusher (16).

5. Device according to one of the preceding claims, **characterized in that** the tightening rod (18) is a screw in helical connection with a tapped portion (19) of the base (8).

6. Device according to one of the preceding claims, **characterized in that** the tightening rod (18) extends in the longitudinal tightening direction (14).

7. Device according to one of the preceding claims, **characterized in that** the binding strap (4) is captive on at least one of the movable tensioners (10, 11) by a fastening (33) of the folds of the binding strap (4).

8. Device according to one of the preceding claims, **characterized in that** a portion of the binding strap (4) is arranged between the second movable tensioner (11) and the base (8).

9. Device according to one of the preceding claims, **characterized in that** the base (8) comprises a pressure surface (23) and the second movable tensioner (11) comprises a contact surface (26), these two surfaces (23, 26) being designed to clamp the portion of the binding strap (4) that is arranged between the second movable tensioner (11) and the base (8), during the tightening of the tightening rod (18).

10. Device according to one of Claims 1 to 8, **characterized in that** the tightening mechanism (5) comprises:
- a second movable pusher (30) arranged in the central opening (9), opposite the second movable tensioner (11), the second movable pusher (30) being slidably mounted on the base (8) by a slide connection in the longitudinal tightening direction (14), the second movable pusher (30) extending in the central opening (9) substantially perpendicularly to the longitudinal tightening direction (14);
- a second tightening rod (31) designed to move and constrain the second movable pusher (30) in the direction of the second movable tensioner (11), in the longitudinal tightening direction (14).

11. Device according to Claim 10, **characterized in that** a portion of the binding strap (4) is arranged between the second movable tensioner (11) and the second movable pusher (30).

12. Device according to either of Claims 10 and 11, **characterized in that** the second movable pusher (30) comprises a pressure surface (32) and the second movable tensioner (11) comprises a contact surface (26), these two surfaces (32, 26) being designed to clamp the portion of the binding strap (4) that is arranged between the second movable pusher (30) and the second movable tensioner (11), during the tightening of a tightening rod (18, 31).

13. Device according to one of Claims 10 to 12, **characterized in that** the second movable pusher (30) comprises runners (17) at its ends, these runners (17) being engaged in lateral slots (13) of the base (8) that extend in the longitudinal tightening direction (14), on either side of the central opening (9).

14. Device according to one of Claims 10 to 13, **characterized in that** the second tightening rod (31) has an end (20) in pivot connection with the second movable pusher (16).

15. Device according to one of Claims 10 to 14, **characterized in that** the second tightening rod (31) is a screw in helical connection with a tapped portion (19) of the base (8).

16. Device according to one of Claims 10 to 15, **characterized in that** the two tightening rods (18, 31) are coaxial.

17. Device according to one of the preceding claims, **characterized in that** the base (8) comprises a sole (28) so that it can bear on the electrochemical accumulator module (1), this sole (28) comprising a housing (27) for the folds of the binding strap (4).

18. Device according to Claim 17, **characterized in that** the base (8) comprises a support foot (29) on the opposite side to the housing (27).

19. Prismatic electrochemical accumulator module comprising at least one accumulator cell (2), and comprising a clamping plate (3) on two opposite faces, **characterized in that** it comprises a containment device according to one of Claims 1 to 18.

20. Containment method for a prismatic electrochemical accumulator module, **characterized in that** it employs a containment device according to one of Claims 1 to 18 and **in that** it comprises the following steps:
- placing the binding strap (4) around the module (1);
- manually pre-tightening the binding strap (4) by pulling on its free ends (24, 25);
- tightening the tightening rod (18) until obtaining a predetermined tightening force of the binding strap (4).
